Europäisches Patentamt

(19) European Patent Office

Office européen des brevets

(11) Numéro de publication: **0 097 542**
**A1**

(12) **DEMANDE DE BREVET EUROPEEN**

(21) Numéro de dépôt: 83401028.2

(22) Date de dépôt: 24.05.83

(51) Int. Cl.³: **H 01 G 4/26**
**H 01 G 13/00**

(30) Priorité: 04.06.82 FR 8209732

(43) Date de publication de la demande:
04.01.84 Bulletin 84/1

(84) Etats contractants désignés:
AT DE FR GB IT NL

(71) Demandeur: L.C.C.-C.I.C.E. - COMPAGNIE
EUROPEENNE DE COMPOSANTS ELECTRONIQUES
101, Boulevard Murat
F-75781 Paris Cedex 16(FR)

(72) Inventeur: Fleuret, Daniel
THOMSON-CSF SCPI 173, bld Haussmann
F-75379 Paris Cedex 08(FR)

(74) Mandataire: Jacquard, Philippe et al,
THOMSON-CSF SCPI 173, Bld Haussmann
F-75379 Paris Cedex 08(FR)

(54) Procédé de fabrication d'un pavé de condensateur multicouches et dispositif pour sa mise en oeuvre.

(57) L'invention concerne un procédé de fabrication d'un pavé de condensateur multi-couches et un dispositif pour sa mise en oeuvre.

Deux films métallisés superposés ($F_1$, $F_2$) sont amenés par une chenille d'entraînement (3, 4, 5, 6) à l'intérieur d'une cavité de manière à former un empilement de plis successifs. La cavité est bordée par des parois (13, 14, 15, 16). Le déplacement horizontal d'un support (11) produit dans une première opération une compression transversale de l'empilement, et le déplacement d'une tige mobile (12) produit une compression verticale de l'empilement. L'empilement ainsi comprimé est alors schoopé de manière à réaliser un pavé élémentaire.

FIG. 1

EP 0 097 542 A1

# PROCEDE DE FABRICATION D'UN PAVE DE CONDENSATEUR MULTI-COUCHES ET DISPOSITIF POUR SA MISE EN OEUVRE

La présente invention a pour objet un procédé de fabrication d'un pavé de condensateur multi-couches et un dispositif pour sa mise en oeuvre.

On connaît déjà un procédé de fabrication de condensateur multi-couches par bobinage hélicoïdal de deux films sur une roue, avec interposition de couches intercalaires, de manière à diviser l'enroulement en plusieurs condensateurs mères superposés. On recouvre ensuite complètement, avec un métal de contact, les bords latéraux des couches et on sépare les condensateurs mères destinés à donner ensuite par découpage des condensateurs individuels.

Ce procédé présente divers inconvénients. D'une part, il nécessite plusieurs opérations de manutention, d'une part pour amener la roue de l'installation où l'enroulement est produit jusqu'au poste de travail où est réalisé le schoopage, et ensuite de séparation des intercalaires et des condensateurs mères qui sont amenés sur une machine où sera réalisé leur découpage en une pluralité de pavés élémentaires de condensateurs multi-couches. D'autre part, l'enroulement des films métallisés sur une roue ne permet pas d'appliquer à ceux-ci une tension mécanique suffisamment importante pour éviter que du gaz ne soit emprisonné dans le condensateur. Une telle présence de gaz au sein du condensateur détériore en effet sa tenue au champ alternatif. Ce phénomène est dû à la dégradation du condensateur par ionisation.

La présente invention a pour objet un procédé de fabrication d'un pavé élémentaire de condensateur multi-couches ne présentant pas ces inconvénients.

Le procédé selon l'invention comporte les étapes suivants :

a) dérouler au moins un film métallisé, qui forme une succession de couches alternativement isolantes et conductrices présentant des métallisations décalées latéralement ;

b) remplir au moins partiellement une cavité à l'aide desdits rubans au moins sous l'action de la gravité, de manière à former des plis successifs empilés suivant une direction longitudinale et dont au moins certains sont en contact avec deux bords de la cavité situés dans une première direction latérale, les bords latéraux dudit film métallisés étant situés dans une seconde direction latérale ;

c) comprimer selon la direction longitudinale les plis successifs empilés ;

d) munir le pavé de connexions électriques;

L'étape d) peut constituer en un schoopage selon la seconde direction latérale les bords latéraux dudit film.

Selon un mode de réalisation, le procédé comporte, entre l'étape b) et l'étape c) ou entre l'étape c) et l'étape d), une étape b') de compression selon la première direction transversale, des plis successifs empilés.

Le procédé peut comporter après l'étape b), une étape préliminaire b") de compression selon la direction longitudinale des plis successifs empilés.

Selon un mode de réalisation avantageux, le pavé est chauffé lors de la compression de manière à faciliter celle-ci. En variante, la température de chauffage est choisie de telle manière qu'elle assure le traitement thermique des pavés.

Selon un mode de réalisation préféré, le film est revêtu sur au moins une face d'une laque assurant le collage de l'empilement lors de la compression. Le film peut présenter une pluralité de métallisations espacées latéralement, de telle sorte que le pavé obtenu est un condensateur mère qui est découpé en pavés individuels avant l'étape d).

L'invention concerne également un dispositif comportant un bloc de compression pour la mise en oeuvre du procédé ci-dessus. Il est caractérisé en ce qu'il comporte :

3

a) au moins une bobine portant au moins un film métallisé ;

b) un dispositif de plaquage et d'entraînement du film ;

c) un premier support présentant un décrochement formant un premier côté longitudinal et un deuxième côté latéral d'une cavité ;

d) un deuxième support présentant un décrochement formant un troisième côté longitudinal et un quatrième côté latéral de la cavité ;

e) un dispositif d'entraînement longitudinal agencé de manière à modifier la distance entre le premier et troisième côtés longitudinaux ;

et en ce que le dispositif de plaquage et d'entraînement du film est disposé de manière telle que l'empilement se fasse sur le premier côté longitudinal et qu'au moins certains des plis successifs soient en contact avec lesdits deuxième et quatrième côtés latéraux.

Selon un mode de réalisation, le dispositif comporte un dispositif comporte un dispositif de schoopage des bords latéraux dudit film.

Selon un mode de réalisation, le dispositif comporte un dispositif d'entraînement latéral agencé de manière à modifier la distance entre les deuxième et quatrième côtés latéraux.

Le dispositif de plaquage et d'entraînement dudit film peut comporter deux chenilles portant chacune un tapis laminoir.

Au moins un des dispositifs d'entraînement peut comporter une tige mobile dans un logement du support correspondant. Un des dispositifs d'entraînement peut alors comporter un moyen pour déplacer le support correspondant.

Selon une variante, le dispositif comporte au moins une pièce formant au moins un cinquième côté latéral de la cavité, en contact avec les bords dudit film de l'empilement. Ladite pièce peut être amovible.

Le dispositif de plaquage et d'entraînement des films peut être disposé de manière telle que ceux-ci soient introduit dans une direction sensiblement verticale à la partie supérieure de la cavité.

Selon un mode de réalisation préféré, le bloc de compression comporte des moyens destinés à chauffer le pavé pendant la compression de manière à faciliter celle-ci. En variante, la température est choisie telle qu'elle assure le traitement thermique de celui-ci tout en facilitant la compression.

L'invention sera mieux comprise à la lecture de la description qui va suivre donnée à titre d'exemple non limitatif, en se reportant aux dessins ci-annexés où :

- la figure 1 représente un schéma en coupe d'un dispositif pour la mise en oeuvre du procédé selon l'invention ;

- la figure 2 illustre l'empilement de deux films métallisés ;

- les figures 3a et 3b illustrent les étapes de compression de l'empilement de films résultant de l'utilisation du dispositif de la figure 1 ;

- la figure 4 est une vue en perspective d'un dispositif selon la figure 1 ;

- les figures 5 à 7 représentent les variantes des dispositifs suivant l'invention ;

- les figures 8 à 10 représentent des variantes de films utilisables selon l'invention.

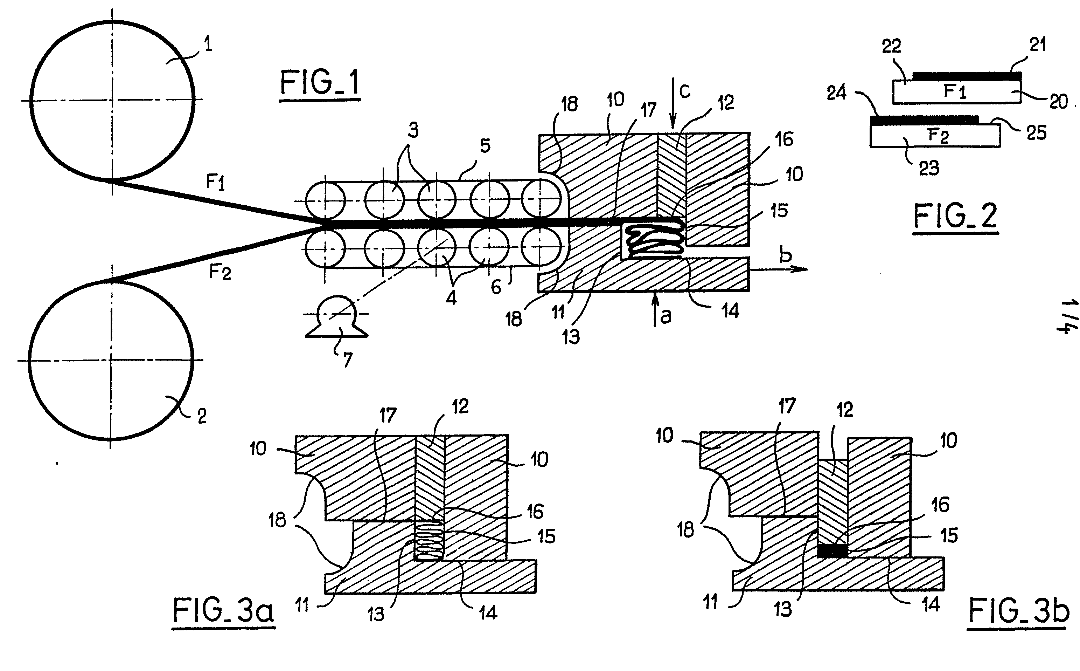

Selon la figure 1, deux films métallisés $F_1$ et $F_2$ sont déroulés à partir de deux bobines respectivement 1 et 2. Le dispositif d'entraînement comporte deux séries de rouleaux 3 et 4, autour desquels sont disposés des tapis 5 et 6. L'écartement entre les rouleaux est choisi de telle manière que, lorsque ceux-ci sont entraînés par un moteur 7, les films $F_1$ et $F_2$ soient plaqués l'un sur l'autre de manière que l'air qui reste emprisonné entre les deux films soit chassé. Cette opération préliminaire exerce un laminage sur les films ce qui contribue également à les maintenir en position relative l'un par rapport à l'autre. Selon la figure 2, le film $F_1$ est en effet constitué par un film isolant 20 recouvert d'une métallisation 21 disposée sur sa face supérieure. Cette métallisation s'étend depuis le bord droit du film et s'interrompt à une certaine distance du bord gauche en laissant un espace non revêtu 22. De même, le film $F_2$ est

constitué par un film isolant 23 revêtu sur sa face supérieure d'une métallisation 24 qui s'étend depuis le bord gauche du film et en s'interrompant à une certaine distance du bord droit de celui-ci, laissant un espace non revêtu 25. De manière connue en soi, les films $F_1$ et $F_2$ sont délivrés avec un certain décalage latéral ou débord de manière à permettre ensuite la réalisation des contacts sur les bords latéraux des films par une opération de schoopage. Selon la figure 1 donc, les films sont dirigés par le dispositif d'entraînement à rouleaux vers une cavité d'un bloc de pressage où ils vont former un empilement de plis successifs. Cette cavité est délimitée d'une part par un support 11 présentant un décrochement formant horizontalement un premier côté longitudinal 14 et verticalement un deuxième côté latéral 13 de la cavité. Elle est délimitée d'autre part par un deuxième support 10 présentant un décrochement formant horizontalement un troisième côté longitudinal 17 et verticalement un quatrième côté latéral 15 de la cavité. Une tige 12 est mobile dans un logement du support 10 et débouche sur la paroi longitudinale 17.

Un pavé élémentaire de condensateur multi-couches est réalisé de la manière suivante : la cavité est remplie sous l'action de la gravité par lesdits rubans fournis par le dispositif à rouleaux entraîné par le moteur 7 et forme des plis successifs empilés sur la paroi longitudinale 14. Les parois latérales 13 et 15 délimitent les bords d'au moins certains des plis de l'empilement. Lorsqu'une longueur de films correspondant à la valeur de la capacité souhaitée est atteinte, l'avance de la nappe est interrompue. Après coupure éventuelle des films, le bloc de pressage est refermé par translation du support inférieur 11 dans une direction verticale. Dans une deuxième opération, le support 11 est translaté vers la droite de manière à diminuer la largeur de la cavité. Selon la figure 3a, ce mouvement se poursuit jusqu'à ce que la paroi latérale 13 soit en alignement avec un côté de la tige mobile 12 de section rectangulaire. La compression du pavé élémentaire est alors parachevée par l'action de la tige mobile 12 qui vient comprimer longitudinalement l'empilement (figure 3b). Après une éventuelle opération de schoopage, le pavé peut être éjecté et il est prêt à recevoir des contacts electriques et éventuellement un boîtier de manière à former un condensateur élémentaire.

On constate ainsi que le procédé selon l'invention permet de réaliser un pavé élémentaire de manière entièrement automatique sur un seul poste de travail.

D'autre part, un tel pavé élémentaire présente une continuité galvanique directe entre les armatures d'une même polarité, et qui évite l'isolement accidentel de couches mal contactées, par exemple au niveau d'un schoopage éventuel. Il en résulte que les armatures des condensateurs peuvent être connectées par tout moyen, le schoopage restant toutefois un moyen préféré en ce sens qu'il contribue à maintenir la cohésion du condensateur.

Le pavé peut être muni de connexions électriques au niveau de ses armatures en dehors du bloc de compression, sur un équipement connu en soi, par exemple une installation de schoopage de condensateurs bobinés classiques.

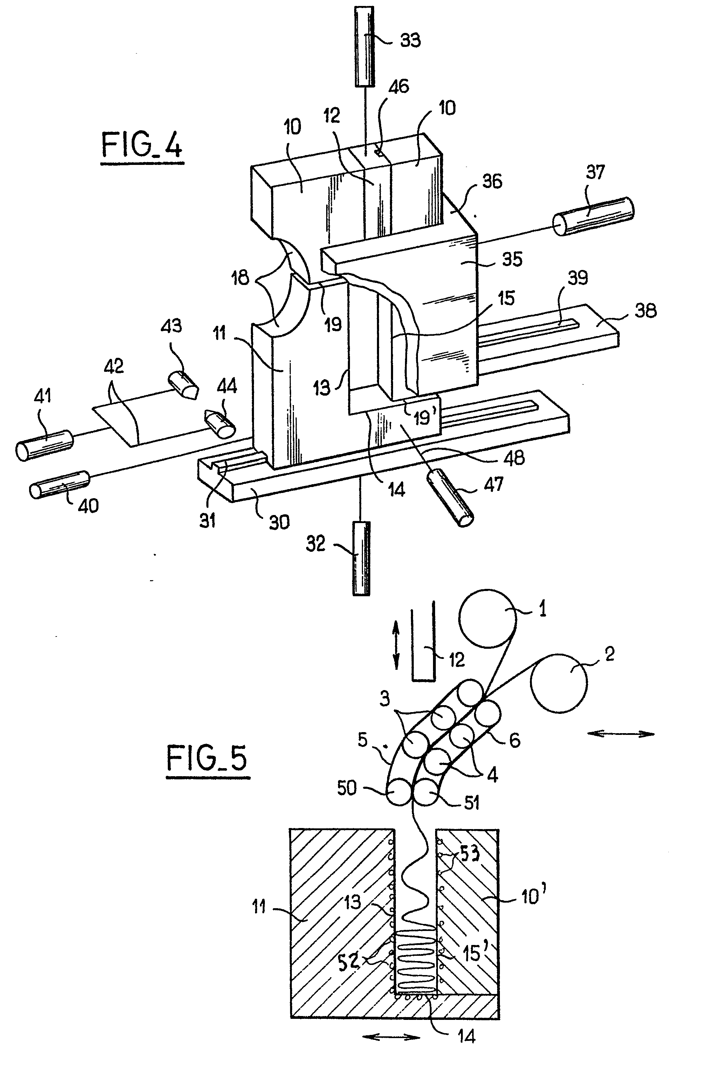

Selon la figure 4, le bloc de pressage comporte un support 10 en deux parties entre lesquelles est disposée la tige mobile 12 qui est entraînée par un vérin 33 coulissant le long d'une glissière 46. La partie du support 10 située en amont est séparée du support 11 par un espace 19 à travers lequel défilent les films. Lorsque l'empilement des films est réalisé dans la cavité délimitée par les côtés 13, 14, 15 et 16, un vérin 32 déplace verticalement une platine 30 sur laquelle est disposée le support 11 de manière à fermer les intervalles 19 et 19' du bloc de pressage. Cette opération préliminaire est facultative. Ensuite, un vérin 40 déplace le support 11 le long d'une glissière 31 portée par la platine 30. Les films empilés sont ainsi comprimés dans une direction transversale. L'opération suivante consiste à comprimer longitudinalement les films par déplacement de la tige mobile 12 le long d'une glissière 36 par l'intermédiaire d'un vérin 33. Selon un mode préféré de réalisation, les films sont maintenus latéralement pendant leur compression par une pièce en U présentant une partie centrale 36 et deux branches latérales 35 qui viennent former un cinquième et un sixième côtés de la cavite. L'écartement entre les deux branches 35 du U est tel qu'il correspond à la largeur des films empilés (y compris le débord : voir figure 2). Lorsque les opérations de compression sont terminées, la pièce en U est dégagée de la cavité par un vérin 37. Pour ce faire, elle coulisse le long d'une glissière 39 d'une platine 38. La cavité une fois dégagée, l'opération de schoopage peut être réalisée. Pour ce faire, deux buses de schoopage 43 et 44 portées par une fourchette 42 sont mises en position par un vérin 41. Le schoopage peut avoir lieu de façon classique à travers un cache non représenté. Une fois le schoopage terminé, les buses 43 et 44 sont mises de nouveau en position de repos, et le pavé élémentaire ainsi fabriqué peut être éjecté par la tige 48 d'un vérin d'éjection 47.

Le bloc de compression comporte avantageusement des moyens de chauffage des films empilés. Ceux-ci sont par exemple des résistances chauffantes disposées dans la masse des pièces constituant le bloc de compression. Pendant la compression, le pavé peut être ainsi porté à une température choisie de préférence telle qu'elle assure son traitement thermique, dans des conditions connues de l'homme de l'art, tout en facilitant la compression et donc la tenue mécanique du pavé après compression. Un tel traitement thermique, réalisé entre 100 et 200° permet la relaxation et la stabilisation du film, ainsi que le cas échéant le compactage entre les couches par retrait du film.

Les films $F_1$ et $F_2$ peuvent être avantageusement revêtus de préférence sur chacune de leurs faces, d'une couche de laque permettant d'assurer le collage de l'empilement lors de l'étape de compression, celle-ci étant réalisée de préférence avec chauffage.

Selon la figure 5, le dispositif à rouleaux 3 et 4 d'entraînement du film est incliné par rapport à la verticale d'un angle d'environ 45° et les films superposés sont délivrés dans une direction verticale par deux rouleaux 50 et 51. La cavité du bloc de pressage est ainsi remplie directement par sa partie supérieure. Le bloc de pressage se compose ainsi d'un support 11 comportant une paroi verticale 13 et une paroi horizontale 14. Le support 10' comporte une paroi verticale 15' et est fixe. Le support 11 peut coulisser par rapport au support 10' le long de la paroi horizontale 14. Lorsque la cavité a été remplie par une quantité donnée de films superposés, le film est coupé et le dispositif d'amenée de films est dégagé latéralement. Le support 11 est alors translaté de manière à comprimer latéralement l'empilement des deux films. La tige mobile 12 qui était précédemment entièrement dégagée de la cavité vient à son tour comprimer longitudinalement l'empilement des films qui donnera après schoopage un pavé élémentaire. Des résistances de chauffage 52 et 53 permettent de chauffer le film pendant la compression par apport de chaleur sur trois des parois de la cavité.

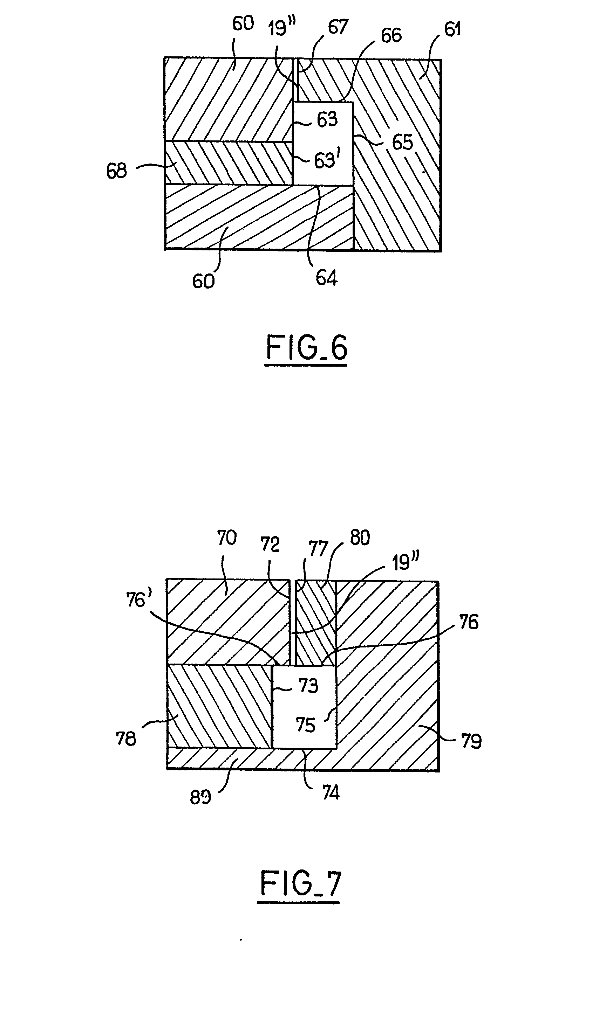

Selon la figure 6, un support 60 présente une paroi verticale 63 et une paroi horizontale 64. Une tige 68 de section rectangulaire est mobile longitudinalement et sa face avant 63' affleure en position de repos la paroi 63. Un support mobile verticalement 61 présente une paroi verticale 65 le long de laquelle il peut coulisser par rapport au support 60, et une paroi horizontale 66. La cavité est ainsi délimitée par les parois 63 à 66. Les films sont introduits à la partie supérieure de la cavité à travers un intervalle 19' situé entre la paroi 63 du support 60 et une paroi 67 du support 61. Le fonctionnement est alors le suivant. Lorsque la cavité est remplie d'une longueur de films correspondant à la capacité souhaitée, le support 61 est translaté verticalement vers le bas de manière à comprimer longitudinalement l'empilement jusqu'à ce que la paroi horizontale 66 se trouve dans le prolongement de la tige mobile 68. L'empilement est alors comprimé transversalement par action de la tige mobile 68.

Selon la figure 7, le bloc de compression se compose de deux supports fixes 79 et 70. Le support 79 comporte une paroi horizontale 74 ménagée dans un prolongement 89 et une paroi verticale 75. Le support 70 présente une paroi horizontale 76'. Deux tiges mobiles 78 et 80 sont mises en oeuvre pour réaliser les opérations de compression. La tige mobile 78 de section rectangulaire coulisse le long de la paroi horizontale 76' et de la paroi horizontale 74. La tige mobile 80 coulisse le long de la paroi verticale 75. Le film est amené à la partie supérieure de la cavité à travers une ouverture 19" ménagée entre le support 70 et la tige mobile 80. Cette ouverture est bordée par deux parois verticales 72 et 77. L'opération de compression est réalisée tout d'abord par déplacement de la tige mobile 78 jusqu'à ce que la paroi 73 se trouve dans le prolongement de la paroi 77 de la tige mobile 80. La compression longitudinale de l'empilement est alors réalisée par déplacement de la tige mobile 80. L'empilement ainsi comprimé peut être alors schoopé de manière à réaliser un pavé élémentaire.

L'invention ne se limite pas aux modes de réalisation décrits ci-dessus. Ainsi, on a décrit deux opérations de compression, l'une transversale, et l'autre longitudinale pour réaliser un pavé élémentaire. La raison en est que d'une part la largeur des plis que l'on peut obtenir est généralement plus grande que celle du pavé élémentaire correspondant et d'autre part qu'il est préférable pour la régularité de la fabrication en série d'avoir un empilement aussi régulier que possible. Comme c'est seulement la longueur des films qui détermine la valeur de la capacité, l'empilement dans la cavité peut être aléatoire et une seule opération de compression peut être réalisée.

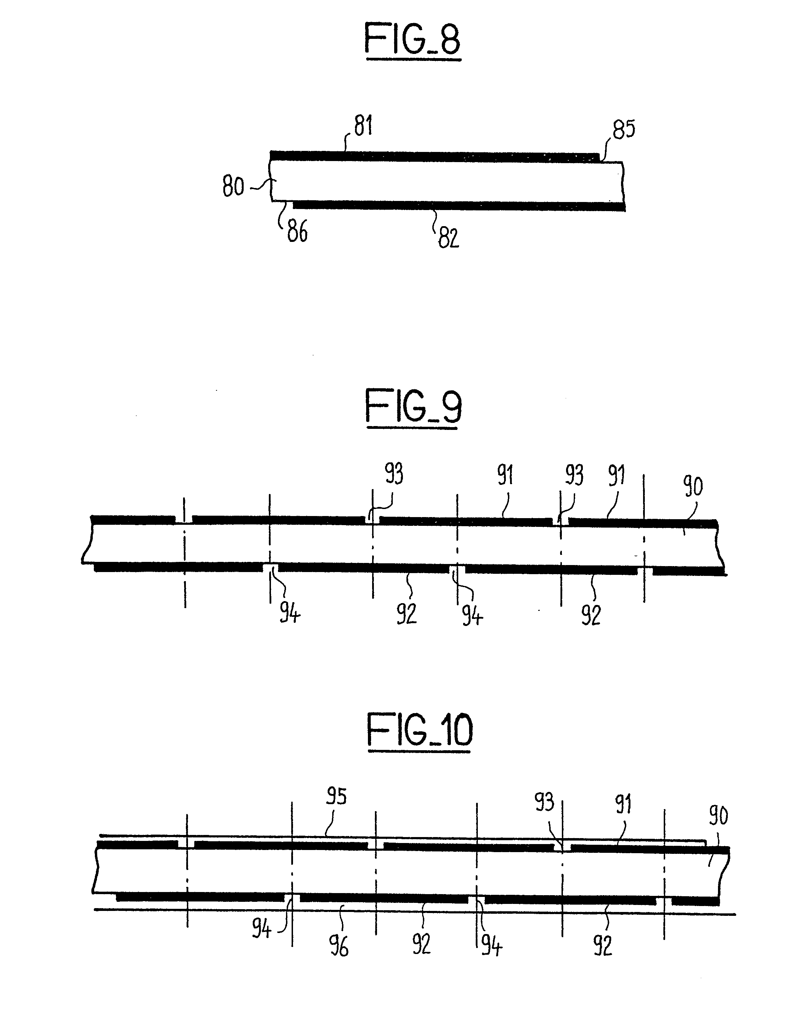

Selon la figure 8, un seul film 80 est utilisé pour réaliser le pavé. Il est métallisé sur ses deux faces et porte deux métallisations décalées 81, 82, s'étendant d'un côté jusqu'au bord du film et laissant subsister de l'autre côté une lisière, respectivement 85, 86 évitant la mise en court-circuit des métallisations 81, 82 entre elles lors du schoopage. Le film peut être en outre revêtu sur chacune de ses faces d'une laque permettant d'assurer le collage de l'empilement lors de l'étape de compression, celle-ci étant réalisée de préférence avec chauffage. La laque peut être un polycarbonate déposé en solution dans du chlorure de méthylène par un procédé de pulvérisation ou bien une laque fondant à haute température c'est-à-dire du type "Hot melt", par exemple un polyamide ou un co-polyamide.

Selon la figure 9, un film 90 est pourvu sur sa face supérieure de bandes longitudinales de métallisation 91 séparées par des intervalles 93, et sur sa face inférieure de bandes longitudinales de matéllisation 92 séparées par des intervalles 94. Les intervalles 93 sont situés à l'aplomb du milieu des bandes 92, et de la même façon, les intervalles 94 sont situés à l'aplomb du milieu des bandes 91. Après réalisation de l'empilement, on obtient un pavé de condensateur mère qui est découpé au droit des intervalles 93 et 94 pour donner des pavés de condensateurs individuels qui seront ensuites métallisés par schoopage. La présence des intervalles 93 et 94 fait qu'après découpe les pavés individuels se présentent comme ceux fabriqués avec le film de la figure 8.

Selon la figure 10, le film, par ailleurs identique à celui de la figure 9, peut être revêtu sur chacune de ses faces d'une couche de laque 95 pour la face supérieure et 96 pour la face inférieure permettant d'assurer le collage de l'empilement lors de l'étape de compression, celle-ci étant réalisée de préférence avec chauffage.

REVENDICATIONS

1. Procédé de fabrication d'un pavé de condensateur multi-couches, caractérisé en ce qu'il comporte les étapes suivantes :

a) dérouler au moins un film ($F_1$, $F_2$) métallisé, qui forme une succession de couches alternativement isolantes et conductrices présentant des métallisations (21, 24) décalées latéralement ;

b) remplir au moins partiellement une cavité à l'aide dudit film ($F_1$, $F_2$) au moins sous l'action de la gravité, de manière à former un empilement suivant une direction longitudinale et en contact avec deux bords (13, 15) de la cavité situés dans une première direction latérale, les bords latéraux dudit film métallisé étant disposés dans une seconde direction latérale ;

c) comprimer selon la direction longitudinale les plis successifs empilés ;

d) munir le pavé de connexions électriques.

2. Procédé selon la revendication 1, caractérisé en ce que l'étape d) consiste en un schoopage selon la seconde direction latérale les bords latéraux dudit film.

3. Procédé selon la revendication 2, caractérisé en ce que le schoopage est réalisé alors que le pavé est dans la cavité.

4. Procédé selon l'une des revendications 1 à 3, caractérisé en ce que entre l'étape b) et l'étape c) ou entre l'étape c) et l'étape d), il comporte une étape b') de compression selon la première direction transversale des plis successifs empilés.

5. Procédé selon la revendication 4, caractérisé en ce qu'il comporte, après l'étape b), une étape préliminaire b") de compression selon la direction longitudinale des plis successifs empilés.

6. Procédé selon l'une des revendications précédentes, caractérisé en ce que le pavé est chauffé lors de la compression de manière à faciliter celle-ci.

7. Procédé selon la revendication 6, caractérisé en ce que la température est choisie telle qu'elle assure également le traitement thermique du pavé.

8. Procédé selon une des revendications précédentes, caractérisé en ce que le film est revêtu sur au moins une face d'une laque assurant le collage de l'empilement lors de la compression.

9. Procédé selon une des revendications précédentes, caractérisé en ce que ledit film présente une pluralité de métallisations espacées latéralement, de telle sorte que le pavé obtenu est un condensateur mère qui est découpé en pavés individuels avant l'étape d).

10. Dispositif pour la mise en oeuvre du procédé selon l'une des revendications précédentes, caractérisé en ce qu'il comporte :

a) au moins une bobine (1, 2) portant au moins un film métallisé ($F_1$, $F_2$) ;

b) un dispositif de plaquage et d'entraînement dudit film (3, 4, 5, 6, 7) ;

c) un premier support (11) présentant un décrochement formant un premier côté longitudinal (14) et un deuxième côté latéral (13) d'une cavité ;

d) un deuxième support (10) présentant un décrochement formant un troisième côté longitudinal (16) et un quatrième côté latéral (15) de la cavité ;

e) un dispositif d'entraînement longitudinal (33) agencé de manière à modifier la distance entre les premier (14) et troisième (16) côtés longitudinaux ;

et en ce que le dispositif de plaquage et d'entraînement dudit film (3 à 7) est disposé de manière telle que l'empilement se fasse sur le premier côté longitudinal (14) et que les plis successifs soient en contact avec lesdits deuxième (13) et quatrième (15) côtés latéraux.

11. Dispositif selon la revendication 10, caractérisé en ce qu'il comporte un dispositif de schoopage (40 à 44) des bords latéraux du film.

12. Dispositif selon l'une des revendications 10 ou 11, caractérisé en ce qu'il comporte un dispositif d'entraînement latéral (40) agencé de manière à modifier la distance entre les deuxième (13) et quatrième (15) côtés latéraux.

13. Dispositif selon l'une des revendications 10 à 12, caractérisé en ce que le dispositif de plaquage et d'entraînement du film (3 à 7) comporte deux chenilles portant chacune un tapis laminoir (5, 6).

14. Dispositif selon l'une des revendications 10 à 13, caractérisé en ce que au moins un des dispositifs d'entraînement (33, 40) est associé à une tige mobile dans un logement du support correspondant et en ce qu'un des dispositifs d'entraînement comporte un moyen (40) pour déplacer le support correspondant.

15. Dispositif selon l'une des revendications 10 à 13, caractérisé en ce qu'il comporte au moins une pièce (35, 36) formant au moins un cinquième côté latéral de la cavité, en contact avec les bords dudit film de l'empilement.

16. Dispositif selon la revendication 15, caractérisé en ce que ladite pièce (35, 36) est amovible.

17. Dispositif selon l'une des revendications 10 à 16, caractérisé en ce que le dispositif de plaquage et d'entraînement dudit film (3 à 7) est disposé de manière telle que celui-ci est introduit dans une direction sensiblement verticale à la partie supérieure de la cavité.

18. Dispositif selon l'une des revendications 10 à 17, caractérisé en ce qu'il comporte des moyens de chauffage dudit film dans la cavité.

FIG_1

1

FIG_2

22    21
F1
20
24
25
F2
23

3    5    18    10    17    c    12
F1
16
10
4    6    15
F2    b
7    18    11    a    14
13

1/4

17    12
10    10

18
16
15

11    13    14

FIG_3a

17    12
10    10

18
16
15

11    13    14

FIG_3b

0097542

FIG_4

FIG_5

0097542

60 19" 67 66 61

68

63
63'
65

60 64

FIG_6

70 72 77 80 19"

76'

76

73
75

78 79

89 74

FIG_7

# FIG_8

# FIG_9

# FIG_10

Office européen
des brevets

**RAPPORT DE RECHERCHE EUROPEENNE**

**0097542**
Numéro de la demande

EP 83 40 1028

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | DE-B-1 100 814 (DR.-ING. P. HOCHHÄUSLER) <br> * Colonne 3, lignes 10-55; figures * | 1 | H 01 G 4/26 <br> H 01 G 13/00 |
| Y | DE-A-1 614 718 (STEINER K.G.) <br> * Page 1, alinéas 3,5; revendications 1,2; figures 1,3 * | 1 | |
| A | DE-A-2 451 863 (ERNST ROEDERSTEIN SPEZIALFABRIK FÜR KONDENSATOREN) | | |
| A | FR-A-2 351 481 (LOCQUENEUX R.) | | |

----- 

|  | DOMAINES TECHNIQUES RECHERCHES (Int. Cl. ³) |
|---|---|
| | H 01 G |

Le présent rapport de recherche a été établi pour toutes les revendications

| Lieu de la recherche <br> LA HAYE | Date d'achèvement de la recherche <br> 29-08-1983 | Examinateur <br> SCHUERMANS N.F.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82